# EUROPÄISCHE PATENTANMELDUNG

(11) **EP 0 894 603 A1**
(43) Veröffentlichungstag der Anmeldung: **03.02.1999**
(21) Anmeldenummer: 98113932.2
(22) Anmeldetag: 24.07.1998
(51) Int. Cl.: B29C 45/16

(54) **Verfahren zum Spritzgiessen von Gegenständen**

(30) Priorität: 30.07.1997 AT 476/97 U
(71) Anmelder: Engel Maschinenbau Gesellschaft m.b.H., A-4311 Schwertberg (AT)
(72) Erfinder: Steinbichler, Georg, 8786 Rottenmann (AT); Ebenhofer, Harald, 4320 Perg (AT)
(74) Vertreter: Hofinger, Engelbert, DDr.

(57) **Zusammenfassung**

Verfahren zum Spritzgießen von Gegenständen wobei nacheinander wenigstens zwei verschiedene Fluide in eine Form eingebracht werden, und wenigstens der die Oberfläche des Gegenstandes bildende Kunststoff ein vernetzbares Material ist.

## Beschreibung

Die Erfindung bezieht sich auf ein Verfahren zum Spritzgießen von Gegenständen, wobei nacheinander wenigstens zwei verschiedene Fluide in eine Form eingebracht werden, von welchen das erste die Oberfläche des Gegenstandes bildet.

In der Thermoplast-Spritzgießtechnik können Spritzgußteile mit einem mehrschichtigen Aufbau unter Einsatz des Sandwich-Spritsgießverfahrens oder der Coinjektionstechnik erzeugt werden. Dabei werden die Schmelzströme aus zwei oder drei Spritzeinheiten, die in einem speziellen Düsenkopf mit Verschlußmechanismen für die einzelnen Schmelzkanäle zusammengeführt werden, hintereinander oder bei prozeßtechnischer Notwendigkeit auch kurzzeitig simultan über ein Schmelzeverteilersystem in die Kavitäten des Spritzgießwerkzeuges eingespritzt. Durch die zeitlich aufeinanderfolgende sowie mengenmäßige Steuerung des Füllvorganges über die zwei oder drei Spritzeinheiten entsteht aufgrund der Wandhaftung als typische rheologische Fließeigenschaft vieler Thermoplastschmelzen und der sehr schnellen Bildung einer erstarrten Randschicht an der kälteren Werkzeugwand beim Füllvorgang ein für diese Verfahrenstechnik typischer Mehrschicht-Aufbau des Spritzgußteiles. Diese Verfahrenstechnik wird in der Verarbeitung thermoplastischer Kunststoffschmelzen seit vielen Jahren erfolgreich eingesetzt. Damit können z.B. Formteile aus einem hochwertigen teuren Thermoplast als Außenhaut und einem minderwertigerem Kunststoff, z.B. Recyclingware, als Innenkern eingesetzt werden. Ist das erste Fluid ein thermoplastischer Kunststoff, das zweite Fluid aber ein Gas, so entstehen in analoger Weise mit Hohlräumen versehene Gegenstände.

Flüssigsilikonkautschuke unterscheiden sich in ihren rheologischen und thermodynamischen Eigenschaften, die für die Verarbeitung im Spritzgußverfahren entscheidend sind, grundsätzlich von Thermoplasten. Die Materialien werden zumeist als teigige pastöse Zweikomponenten-Materialien mit Schopfkolbenpumpen aus Behältern gefördert und in einem bestimmten Mengenverhältnis zueinander dosiert. Erst mit der Vermischung der beiden Komponenten beginnt die Vernetzung. Die Flüssigsilikone müssen also nicht wie Thermoplaste für die Verarbeitung aufgeschmolzen werden, sondern nur die beiden Komponenten A und B in einem bestimmten Mengenverhältnis vermischt und für die Werkzeugfüllung vordosiert werden. Bei Raumtemperatur läuft die beginnende Vernetzung im vermischten Material nur langsam ab. Um kurze und besonders wirtschaftliche Zykluszeiten zu bekommen, wird das vermischte Material in beheizte Werkzeugkavitäten (typische Werkzeugtemperaturen zwischen 160 und 180°C) eingespritzt. Das Material entzieht dem heißen Werkzeug zur schnellen Vulkanisation Wärme. Aufgrund der Behinderung der Wärmeausdehnung steigt der Druck im Werkzeug an. Die Verhältnisse bei anderen durch chemische Reaktion aushärtenden (vernetzbaren) Kunststoffen sind ähnlich wie bei Flüssigkautschuk.

Die Zeit vom Einspritzen des Kunststoffes bis zur Entnahme des hergestellten Spritzgußteiles liegt für Thermoplasten und vernetzbare Kunststoffe in der gleichen Größenordnung. Die Viskosität des vernetzbaren Kunststoffes, insbesondere von Flüssigsilikonkautschuk, liegt jedoch typischerweise um eine Zehnerpotenz unter jener von Thermoplasten. Zu vermuten war daher, daß beim zunächst fast drucklosen Einströmen der Kautschukmischung diese die Form von unten nach oben füllen werde, und daß auch die durch die beginnende Vernetzung bedingte Erstarrung zunächst in dieser Richtung fortschreiten werde. Versuche haben jedoch gezeigt, daß beim aufeinanderfolgenden Einspritzen von zwei vernetzbaren Materialien das erste Material eine Oberflächenschicht bildet, welche den aus dem zweiten Material gebildeten Kern völlig umschließt. Es konnte noch nicht geklärt werden, ob dies darauf zurückzuführen ist, daß der an sich ganz geringe Druck, der sich im Werkzeug am Beginn des Einspritzvorganges aufbaut, ein Absinken der ersten Komponente auf den Grund der Form verhindert oder ob sofort an der ganzen Formwand Vernetzung der ersten Komponente einsetzt.

Die Erfindung besteht in der Maßnahme, bei einem Verfahren der eingangs skizzierten Art vorzusehen, daß wenigstens das die Oberfläche des Gegenstandes bildende Fluid in der Form zu einem vernetzten Kunststoff reagiert.

Verwendet man als zweites Fluid ein Gas, so lassen sich im Rahmen der Erfindung alle Erkenntnisse anwenden, welche im Zusammenhang mit Thermoplasten beim Gasinnendruckverfahren gewonnen worden sind. Insbesondere ist es möglich, die Form mit der zur Reaktion bestimmten ersten Kunststoffmischung nur teilweise zu füllen und das eingespritzte Material durch Gasinjektion aufzublasen. Es besteht jedoch auch die Möglichkeit einer vollständigen Füllung mit anschließender Vergrößerung der Form bzw. mit anschließender Überleitung überschüssigen Materials in eine Nebenkavität. Soll eine Reaktion des Kunststoffes in der Nebenkavität vermieden werden, muß diese gekühlt sein.

Durch das neue Verfahren lassen sich Spritzteile mit völlig neuen Eigenschaften herstellen, beispielsweise Mehrschicht-Bauteile, die aus zwei oder mehreren Flüssigsilikonkautschuktypen zur Erzielung bestimmter gewünschter Eigenschaften aufgebaut sind und z.B. eine Außenhaut aus elektrisch isolierendem Flüssigsilikon und einen Innenkern aus elektrisch leitfähigem Flüssigsilikon aufweisen.

Ein Grund dafür, warum der mehrschichtige Aufbau von Spritzgußteilen aus vernetzbaren Kunststoffen bisher nicht versucht wurde, könnte darin liegen, daß ein Vernetzen der Kunststoffe außerhalb der Form unter allen Umständen vermieden werden muß. Während ein thermoplastischer Kunststoff jederzeit durch Erhitzen wieder verflüssigt und dann entfernt werden kann, ist eine durch vernetzten Kunststoff blockierte Ventileinrichtung nur durch Zerlegen wieder funktionsfähig zu machen. In der konstruktiven Ausbildung kennzeichnet sich eine Ventileinrichtung für die Herstellung von Mehrschichtformteilen aus vernetzbaren Kunststoffen, insbesondere aus Flüssigsilikonkautschuk, somit primär dadurch, daß sie dauernd auf niedriger Temperatur gehalten wird. Es empfiehlt sich jedoch auch die Auswahl von Komponenten, welche gegebenenfalls leicht zu reinigen sind, insbesondere die Verwendung von Kolben statt Förderschnecken. Im einzelnen wird dies anhand der Zeichnungen deutlich.

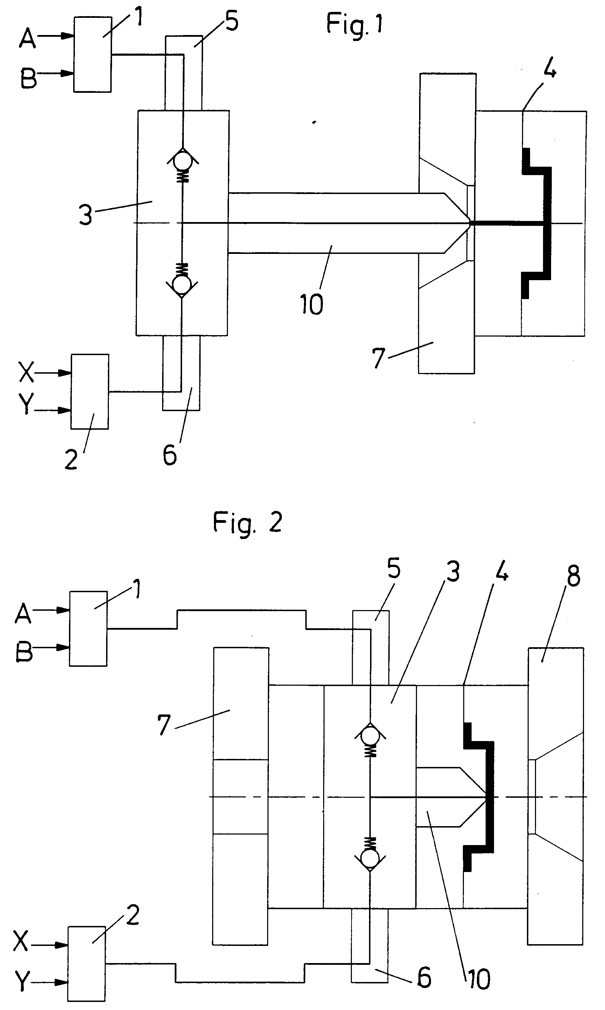

Fig. 1 - 4 zeigen je ein Ausführungsbeispiel einer Einrichtung zur Durchführung des Verfahrens in schematischer Darstellung.

Zur Durchführung des erfindungsgemäßen Verfahrens wird in einer Mischeinrichtung 1 ein erster vernetzbarer Kunststoff, beispielsweise ein Silikonkautschuk, aus Komponenten A und B gemischt, in einer Mischeinrichtung 2 ein zweiter derartiger Kunststoff aus Komponenten X und Y. Die jeweils noch unvernetzte Mischung wird Einspritzeinheiten 5 bzw. 6 zugeführt, die möglichst einfach aufgebaut sein sollen.

Vorzugsweise handelt es sich um Kolben, die mit einem kleinen einstellbaren Gegendruck befüllt werden, um einen unerwünschten Lufteinzug zu verhindern. Den Mischeinrichtungen 1, 2 ist eine gekühlte Ventileinrichtung 3 nachgeschaltet, welche wahlweise für die in den Mischeinrichtungen 1, 2 gemischten Komponenten den Zugang zu einer Spritzgießform 4 freigibt. Die Ventileinrichtung 3 ist vorzugsweise so aufgebaut, wie dies bei Thermoplasten bekannt ist (vgl. US-A 3,947,145), also als Coinjektionsdüse, bei der die Materialzuführkanäle wahlweise zwangsgesteuert durch ein hydraulisch betätigtes Nadel- und Hülsensystem verschlossen werden.

Beim Ausführungsbeispiel nach Fig. 1 erfolgt die Einspritzung des Kunststoffes mittels einer durch die feststehende Formaufspannplatte 7 hindurchgeführten, auf niedriger Temperatur gehaltenen Düse 10. Zur Herstellung eines zweischichtigen Gegenstandes kann nun zuerst mittels der Einspritzeinheit 5 eine erste Komponente eingespritzt werden, welche in der Form 4 derart erstarrt, daß die mittels der Einspritzeinheit 6 eingespritzte zweite Komponente einen allseitig von der ersten Komponente umschlossenen Kern bildet. Zur Angußversiegelung kann abschließend noch eine geringe Menge der ersten Komponente nachgedrückt werden.

Das zweite Ausführungsbeispiel unterscheidet sich von jenem nach Fig. 1 durch die Anordnung der mit den Einspritzeinheiten 5, 6 zu einem Block verbundenen Ventileinrichtung 3 zwischen feststehender Formaufspannplatte 7 und bewegbarer Formaufspannplatte 8. Dadurch wird die Länge der Dose 10, in welcher keine Vernetzung stattfinden darf, verringert. Allerdings liegen nun die gekühlte Ventileinrichtung 3 und die beheizte Form 4 nahe aneinander, sodaß für eine gute gegenseitige Isolierung gesorgt werden muß.

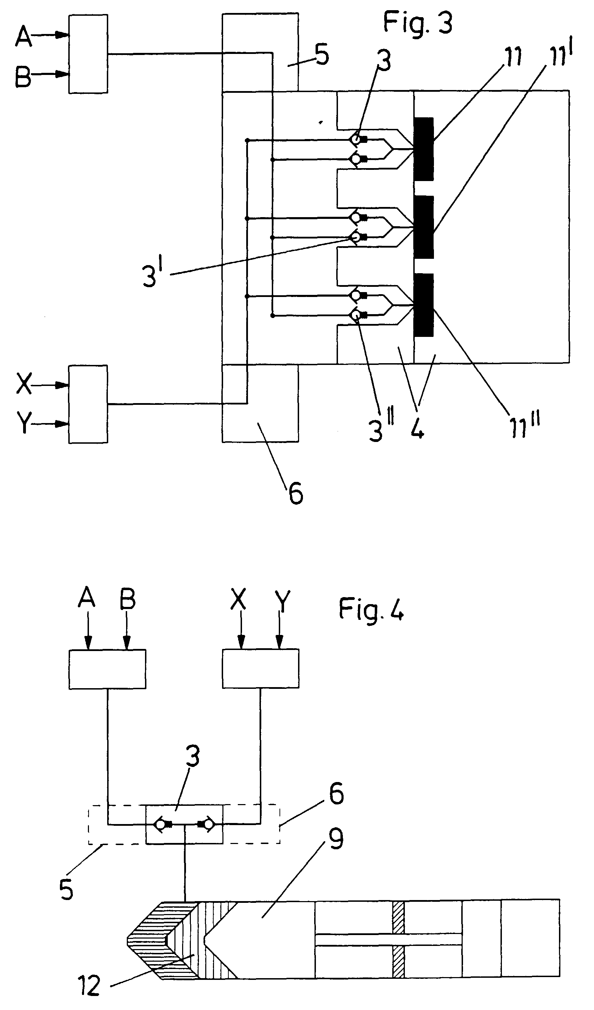

Fig. 3 demonstriert, daß das Verfahren auch bei einer Form anwendbar ist, welche mehrere Kavitäten 11, 11', 11'' aufweist. Bei einer derartigen Ausführung empfiehlt es sich, jeder Kavität 11, 11', 11'' eine eigene Ventileinrichtung 3, 3', 3'' zuzuordnen, wobei allen Ventileinrichtungen 3, 3', 3'' gemeinsame Einspritzeinheiten 5, 6 vorgeschaltet sein können.

Das Ausführungsbeispiel nach Fig. 4 unterscheidet sich insofern wesentlich von jenen nach Fig. 1 - 3, als hier die einzelnen Komponenten nicht unmittelbar von der Ventileinrichtung 3 in die Form 4 gelangen. Sie werden vielmehr nacheinander in den Zylinderraum 12 eines Kolbens 9 geschichtet. In diesen Zylinderraum 12 gelangt zuerst die Mischung aus den Komponenten X, Y und anschließend die Mischung aus den Komponenten A, B. Der durch Vernetzung der Komponenten A, B entstehende Kunststoff bildet jedoch wiederum die Oberfläche des herzustellenden Verbundgegenstandes, weshalb diese Mischung zuerst durch Vorschieben des Kolbens 9 in die nicht dargestellte Form 4 eingespritzt wird.

## Patentansprüche

1. Verfahren zum Spritzgießen von Gegenständen, wobei nacheinander wenigstens zwei verschiedene Fluide in eine Form eingebracht werden, von welchen das erste die Oberfläche des Gegenstandes bildet, dadurch gekennzeichnet, daß wenigstens das die Oberfläche des Gegenstandes bildende Fluid in der Form zu einem vernetzten Kunststoff reagiert.

2. Verfahren nach Anspruch 1, dadurch gekennzeichnet, daß nacheinander die gemischten Komponenten zur Bildung von wenigstens zwei Silikonkautschuken eingebracht werden.

3. Verfahren nach Anspruch 1 oder 2, dadurch gekennzeichnet, daß in an sich bekannter Weise zunächst die Form mit einem ersten Fluid gefüllt und dieses durch das zweite Fluid teilweise in eine Nebenkavität abgedrängt wird.

4. Einrichtung zur Durchführung des Verfahrens nach einem der Ansprüche 1 - 3, dadurch gekennzeichnet, daß mindestens zwei Mischeinrichtungen (1, 2) vorgesehen sind, denen eine gekühlte Ventileinrichtung (3) nachgeschaltet ist, welche wahlweise für die in einer der Mischeinrichtungen (1, 2) gemischten Komponenten eines Materials den Zugang zu einer Spritzform (4) freigibt.

5. Einrichtung nach Anspruch 4, dadurch gekennzeichnet, daß jedem Material eine mit der Ventileinrichtung (3) zu einem Block verbundene Einspritzeinheit (5, 6) zugeordnet ist (Fig. 1 - 3).

6. Einrichtung nach Anspruch 5, dadurch gekennzeichnet, daß die Einspritzeinheit (5, 6) Kolben-Zylinder-Einheiten sind.

7. Einrichtung nach Anspruch 4, dadurch gekennzeichnet, daß der Ventileinrichtung (3) ein Einspritzzylinder (7) nachgeschaltet ist (Fig. 4).
